# EUROPEAN PATENT SPECIFICATION

(11) **EP 2 148 057 B1**
(45) Date of publication and mention of the grant of the patent: **07.09.2011**
(21) Application number: 08159695.9
(22) Date of filing: 04.07.2008
(51) Int. Cl.: F01N 13/00, F01N 3/28

(54) **Catalytic converter system**
Katalysator-system
Système de convertisseur catalytique

(43) Date of publication of application: 27.01.2010
(73) Proprietor: Ford Global Technologies, LLC, Dearborn, MI 48126 (US)
(72) Inventor: Blomroos, Magnus, S-426 58 Västra Frölunda (SE); Laurell, Mats, S-413 17 Göteborg (SE); Johansson, Conny, S-416 66 Göteborg (SE); Johansson, Lennart, S-423 43 Torslanda (SE); Sundberg, Andreas, S-252 50 Helsingborg (SE)
(74) Representative: VALEA AB

(56) References cited:
- WO-A-02/075126
- DE-A1- 10 314 085
- JP-A- 1 012 018
- JP-A- 8 189 351
- US-A1- 2001 025 419
- US-A1- 2005 022 382
- US-A1- 2007 089 402
- US-A1- 2007 178 026

## Description

### TECHNICAL FIELD

The present invention relates to a catalyst arrangement in a motor vehicle. In particular, the present invention relates to a catalyst arrangement comprising a catalyst of a porous material having a cavity and a boss.

### BACKGROUND OF THE INVENTION

In conventional vehicles, the emission after treatment system generally comprises an exhaust manifold, a down-pipe and a catalyst. A first front oxygen sensor providing feedback data is generally arranged in the down-pipe for controlling the air-fuel mixture flowing into the engine. A second rear oxygen sensor is mounted after the catalyst or into the catalyst; in the latter case it is a so-called integrated sensor, for controlling the oxygen content of the inflowing exhausts thereto, and for calibrating the first oxygen sensor as well. This operation of the oxygen sensors is called "closed-loop-control".

In the-present-day-situation, it is customary that the emission system runs without any feedback from the front oxygen sensor during an initial time period of approximately ten seconds from a cold start since the oxygen sensors cannot operate until they are completely heated. The oxygen sensors are generally not pre-heated before the start-up of the internal combustion engine in order to avoid thermal chock. If the oxygen sensors were preheated they could crack. Therefore, the front oxygen sensor is heated from its internal heater element during said initial time period until the sensor is heated enough and the closed-loop-control can start. In EP 1 510 672 A1 it is disclosed that the surroundings of the second oxygen sensor, said oxygen sensor being integrated in the catalyst, can be heated with the aid of a heating arrangement thereby reducing the time before closed-loop-control can start. US 2007/0089402A shows another arrangement of an exhaust sensor in a catalyst.

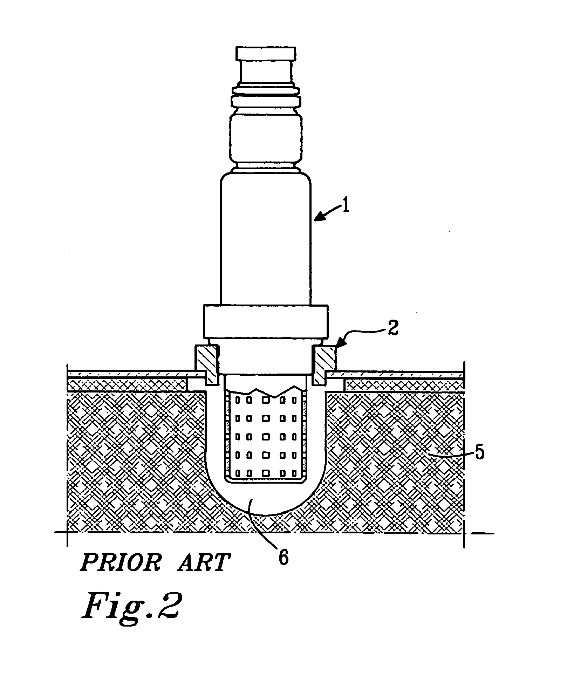

A particular problem arises when the oxygen sensor is integrated in a catalyst made of a porous material, and more specifically when the porous material is a ceramic. In this case it is essential to have a support mat of for example an insulating material between the catalyst and the canning surrounding the catalyst in order to keep the catalyst in place. However, when a catalyst arrangement comprising an oxygen sensor and a catalyst of a porous material is used it is difficult to avoid pockets of cold surfaces leading to the formation of water condensation close to the sensor due to the cold surfaces on and around the boss wherein the oxygen sensor is mounted. Figure 2 illustrates a well-known catalyst arrangement comprising an oxygen sensor, a boss and a catalyst made of a porous material. Due to the fact that there are surfaces perpendicular to the exhaust gas flow, these surfaces will to a great extent be located in the exhaust gas "shade", wherein water condensation can easily take place on the cold surfaces.

In greater detail, water drops are formed by means of the condensation of water vapour existing on the cold exhaust pipe walls. When the water drops reach a certain size, or when the vehicle accelerates, the associated increase in mass flows through the vehicle can lead to that the water drops drip off, are released and collide with the oxygen sensor. In time, this phenomenon may lead to the destruction of the oxygen sensor.

The main part of the emissions from today's vehicles descends from cold starts and the mentioned initial time periods from the cold starts when the closed-loop-control isn't in operation. Consequently, it is desirable to reduce the time of the cold starts and the initial time periods for reducing emissions.

### SUMMARY OF THE INVENTION

It is an object of the present invention to eliminate or at least reduce the above mentioned problem with water condensation on cold surfaces around the sensor in a catalyst of porous material, such as a ceramic material.

This objective is achieved in accordance with the present invention by means of a catalyst arrangement comprising a catalyst made of a porous material in an exhaust gas system of a motor vehicle, said catalyst having a cavity for receiving at least part of a sensor element of an exhaust gas probe, said cavity having an entrance, said entrance being surrounded by a canning and a support mat located between the canning and the catalyst surface, wherein a boss is arranged between the sensor element and the canning surrounding the entrance of the cavity , characterized in that the entrance of the cavity has a chamfered surface and that the boss also has a chamfered surface facing the chamfered surface of the entrance of the cavity thus creating a gap between said two chamfered surfaces to allow gas circulation there between.

Thus, in contrast to the well-known arrangement (Fig.2), where the outer surface of the boss is perpendicular to direction of the exhaust gas flow, the catalyst arrangement of the present invention provides a boss with a chamfered outer surface facing the chamfered surface of the entrance of the cavity, i.e. part of the catalyst surface. Consequently, exhaust gas flow can spread from the chamfered part of the catalyst surface and heat the boss thereby preventing cold surfaces and water condensation.

### BRIEF DESCRIPTION OF THE DRAWINGS (OPTIONAL)

The invention will be described in the following by way of example only and with reference to the embodiments illustrated in the drawings, in which
- Fig. 1: shows a schematic view of the emission after treatment system in a conventional vehicle,
- Fig. 2: shows a schematic view of a prior art catalyst arrangement,
- Fig. 3: shows a schematic view of an embodiment of the inventive catalyst arrangement,
- Fig. 4: shows a schematic view of an embodiment of the inventive catalyst arrangement according to Fig. 3 wherein the oxygen sensor is removed,
- Fig. 5: shows a schematic view of an embodiment of the boss.

### DETAILED DESCRIPTION OF PREFERRED EMBODIMENTS

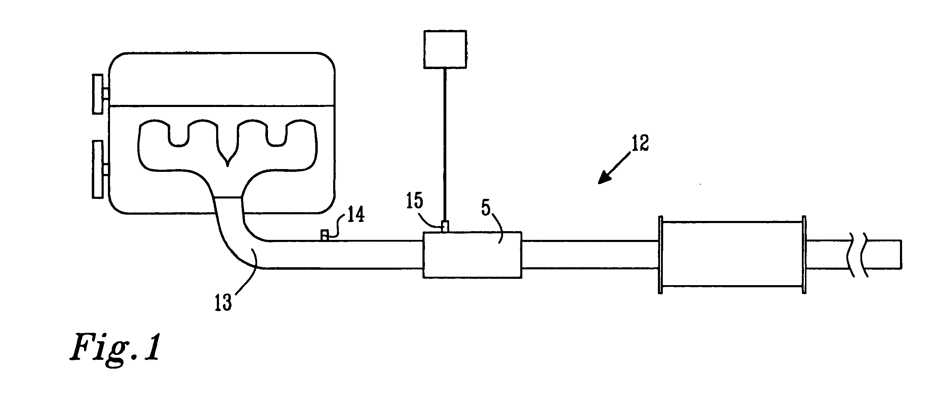

In conventional vehicles, the emission after treatment system comprises an exhaust manifold 12, a down-pipe 13 and a catalyst 5, see Fig. 1. A first front oxygen sensor 14 is arranged outside or inside the catalyst 5. A second rear oxygen sensor 15 is arranged in the rear part of the catalyst or after the catalyst. It is to be understood that that the invention relates to any oxygen sensor being arranged inside the catalyst 5.

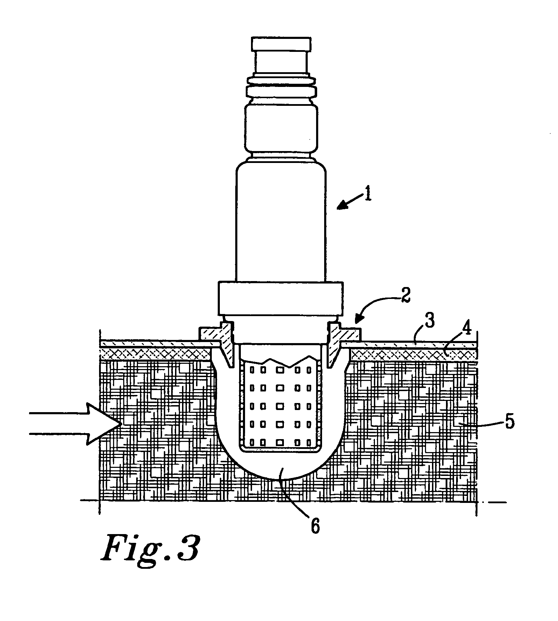

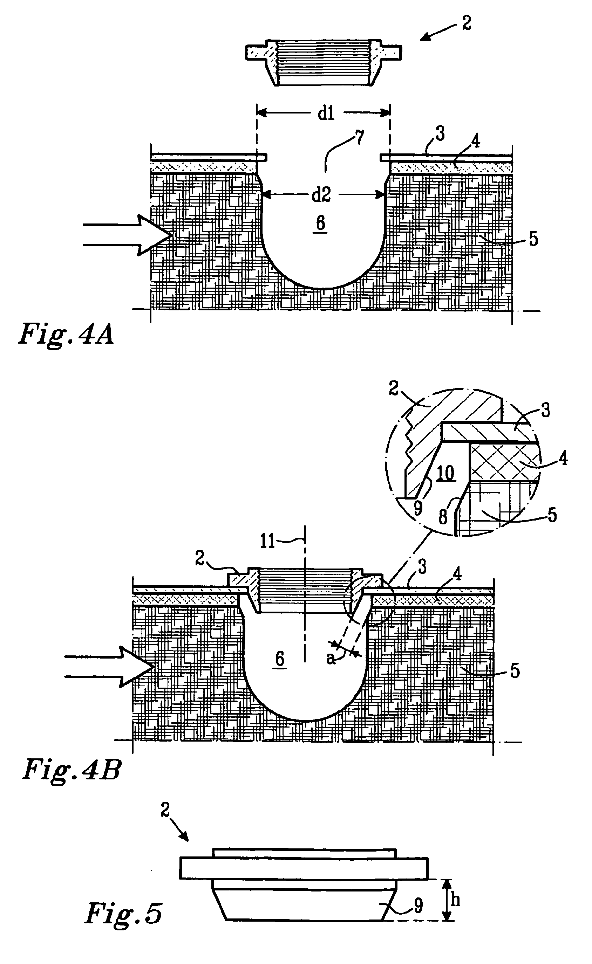

According to the embodiment shown in Figures 3 and 4 there is provided a catalyst arrangement comprising a catalyst 5 made of a porous material, especially a ceramic material, in an exhaust gas system of a motor vehicle. The catalyst has a cavity 6 for receiving at least part of a sensor element 1 of an exhaust gas probe. The cavity has an entrance 7, which is surrounded by a canning 3 and a support mat 4 located between the canning 3 and the catalyst surface. A a boss 2 is arranged between the sensor element 1 and the canning 3 surrounding the entrance of the cavity 6. The entrance 7 of the cavity 6 has a chamfered surface 8. The boss 2 also has a chamfered surface 9 facing the chamfered surface 8 of the entrance 7 of the cavity, thus creating a gap 10 between said two chamfered surfaces to allow gas circulation there between.

It is to be understood that the term "catalyst" denotes a substrate made of a porous material, especially a ceramic, wherein said porous material may be impregnated with a wash liquid containing one or more substances capable of performing catalysis.

It is to be understood that the sensor element 1 may be arranged so that it is parallel to the center axis 11 of the cavity 6 or in a way so that it forms an angle with said center axis 11.

The width, a, of the gap 10 between the chamfered surface 8 of the cavity and the chamfered surface 9 of the boss is between 1 and 10 millimeters (mm). Preferably, the width, a, of the gap 10 is between 2 and 5 mm.

The chamfered surface 8 of the cavity and the chamfered surface 9 of the boss may be parallel. Alternatively, the width, a, of the gap 10 may vary along the length of the gap. For example, the chamfered surfaces 8 and 9 may converge or diverge. The width, a, of the gap 10 as referred to above is defined as the minimum width along the length of the gap in the case the width varies.

The diameter of the chamfered entrance 7 of the cavity, according to one aspect of the invention, is between 1 and 20 mm larger at the broadest outer end d1 than at its narrowest inner end d2. Preferably, the diameter of the chamfered entrance 7 of the cavity is between 1 and 10 mm at the broadest outer end d1 than at its narrowest inner end d2. More preferably, the diameter of the chamfered entrance 7 of the cavity is between 1 and 4 mm at the broadest outer end d1 than at its narrowest inner end d2.

In a further aspect of the invention the height h of the boss 2 is between 1 and 20 mm. Preferably, the height h of the boss 2 is between 1 and 15 mm. More preferably, the height h of the boss 2 is between 3 and 6 mm.

In still a further aspect of the invention the chamfered surface 8 of the cavity forms an angle with a center axis 11 of the recess 6 that is between 10° and 60°. Preferably, the chamfered surface 8 of the cavity forms an angle with said center axis 11 that is between 20° and 40°.

In one embodiment of the invention the chamfered surface 9 of the boss forms an angle with said center axis 11 of between 10° and 60°. Preferably, the chamfered surface 9 of the boss 2 forms an angle with said center axis 11 of between 20° and 40°.

In a further embodiment the canning 3 is made of a material comprising a metal. Preferably, the canning is made of a metal.

The boss 2 may be made of a material comprising a metal. Preferably, the boss 2 is made of a metal.

The support mat 4 may be made of an insulating and/or elastic material. Examples of materials suitable for use as support mats include, but are not limited to wire mesh and fiber mats.

According to the invention the catalyst 5 is made of a porous material. In a preferred embodiment the catalyst 5 is made of a ceramic material.

The above embodiments may be combined with each other and with any other embodiment, aspect or claim of the invention described hereinbefore or hereinafter.

The design with the chamfered surfaces on the catalyst cavity 6 and the boss 2 will allow warm exhaust gas flow to reach and to warm up the boss 2, thereby preventing water condensation to occur around the sensor. The chamfered surface 9 of the boss 2 and the matched chamfered surface 8 of the entrance 7 of the cavity 6 minimize the risk that exhaust gas "shade" will occur.

A further advantage of the chamfered surface 8 of the catalyst cavity 6 is that the chamfer opens up the catalyst substrate letting exhaust gas flow reach the chamfered surface 9 of the boss 2. Since the cells of the catalyst substrate are are opened where the chamfer 8 is machined, hot exhaust gas flow can naturally spread and warm up the boss surfaces.

At assembly of a prior art catalyst assembly according to Fig. 2 the support mat 4 has the opening for the sensor element 1 pre-punched. Due to tolerances the support mat 4 will normally not be exactly adjacent the boss 2, but a pocket will occur there between. This pocket is surrounded by the catalyst substrate, the support mat, the boss and the canning. The present invention may also be assembled with a pre-punched hole in the support mat 4, but due to the chamfered surfaces that fit together it is possible to have tighter tolerances. In case the hole in the support mat overlaps the cavity opening it can be bent down into the gap between the catalyst substrate and the boss. This allows to have more beneficial tolerances and decreases the size of the pockets.

## Claims

1. A catalyst arrangement comprising a catalyst (5) made of a porous material in an exhaust gas system of a motor vehicle, said catalyst having a cavity (6) for receiving at least part of a sensor element (1) of an exhaust gas probe, said cavity having an entrance (7), said entrance being surrounded by a canning (3) and a support mat(4) located between the canning (3) and the catalyst surface, wherein a boss (2) is arranged between the sensor element (1) and the canning (3) surrounding the entrance of the cavity (6),
**characterized in that** the entrance (7) of the cavity (6) has a chamfered surface (8) and that the boss (2) also has a chamfered surface (9) facing the chamfered surface (8) of the entrance (7) of the cavity thus creating a gap (10) between said two chamfered surfaces to allow gas circulation there between.

2. A catalyst arrangement according to claim 1, **characterized in that** the width (a) of the gap (10) between the chamfered surface (8) of the cavity and the chamfered surface (9) of the boss is between 1 and 10 mm.

3. A catalyst arrangement according to claim 2, **characterized in that** the width (a) of the gap (10) between the chamfered surface (8) of the cavity and the chamfered surface (9) of the boss is between 2 and 5 mm.

4. A catalyst arrangement according to any of claims 1 to 3, **characterized in that** the diameter of the chamfered entrance (7) of the cavity is between 1 and 10 mm larger at the broadest outer end (d1) than at its narrowest inner end (d2).

5. A catalyst arrangement according to claim 4, **characterized in that** the diameter of the chamfered entrance (7) of the cavity is between 1 and 4 mm larger at the broadest outer end (d1) than at its narrowest inner end (d2).

6. A catalyst arrangement according to any of claims 1 to 5, **characterized in that** the height (h) of the boss (2) is between 1 and 15 mm.

7. A catalyst arrangement according to claim 6 further **characterized in that** the height. (h) of the boss (2) is between 3 and 6 mm.

8. A catalyst arrangement according to any of claims 1 to 7 **characterized in that** the chamfered surface (8) of the cavity forms an angle with a center axis (11) that is between 10° and 60°.

9. A catalyst arrangement according to claim 8, **characterized in that** the chamfered surface (8) of the cavity forms an angle with a center axis (11) that is 20° and 40°.

10. A catalyst arrangement according to any of claims 1 to 9, **characterized in that** the chamfered surface (9) of the boss forms an angle with a center axis (11) that is between 10° and 60°.

11. A catalyst arrangement according to claim 10 **characterized in that** the chamfered surface (9) of the boss forms an angle with a center axis (11) that is 20° and 40°.

12. A catalyst arrangement according to any of claims 1 to 11, **characterized in that** the canning comprises a metal.

13. A catalyst arrangement according to any of claims 1 to 12, **characterized in that** the boss (2) comprises a metal.

14. A catalyst arrangement according to any of claims 1 to 13, **characterized in that** the support mat (4) comprises an insulating material.

15. A catalyst arrangement according to any of claims 1 to 14, **characterized in that** the catalyst is made of a ceramic.

## Patentansprüche

1. Eine Katalysatoranordnung, umfassend einen aus einem porösen Material hergestellten Katalysator (5) in einem Abgassystem eines Kraftfahrzeugs, wobei der Katalysator einen Hohlraum (6) zum Aufnehmen wenigstens eines Teils eines Sensorelements (1) einer Abgassonde aufweist, wobei der Hohlraum einen Eingang (7) aufweist, der von einer Verblechung (3) und einer zwischen der Verblechung (3) und der Katalysatoroberfläche gelegenen Tragmatte (4) umgeben ist, und wobei ein Anschlussstück (2) zwischen dem Sensorelement (1) und der den Eingang des Hohlraums (6) umgebenden Verblechung (3) angeordnet ist, **dadurch gekennzeichnet, dass**
der Eingang (7) des Hohlraums (6) eine angefaste Oberfläche (8) aufweist und dass das Anschlussstück (2) ebenfalls eine angefaste Oberfläche (9) aufweist, die der angefasten Oberfläche (8) des Eingangs (7) des Hohlraums gegenüberliegt, wodurch ein Spalt (10) zwischen den beiden angefasten Oberflächen erzeugt wird, um dazwischen das Zirkulieren von Gas zu ermöglichen.

2. Eine Katalysatoranordnung nach Anspruch 1, **dadurch gekennzeichnet, dass** die Breite (a) des Spaltes (10) zwischen der angefasten Oberfläche (8) des Hohlraums und der angefasten Oberfläche (9) des Anschlussstücks zwischen 1 und 10 mm beträgt.

3. Eine Katalysatoranordnung nach Anspruch 2, **dadurch gekennzeichnet, dass** die Breite (a) des Spaltes (10) zwischen der angefasten Oberfläche (8) des Hohlraums und der angefasten Oberfläche (9) des Anschlussstücks zwischen 2 und 5 mm beträgt.

4. Eine Katalysatoranordnung nach einem der Ansprüche 1 bis 3, **dadurch gekennzeichnet, dass** der Durchmesser des angefasten Eingangs (7) des Hohlraums an dem breitesten äußeren Ende (d1) zwischen 1 und 10 mm größer ist als an seinem schmälsten inneren Ende (d2).

5. Eine Katalysatoranordnung nach Anspruch 4, **dadurch gekennzeichnet, dass** der Durchmesser des angefasten Eingangs (7) des Hohlraums an dem breitesten äußeren Ende (d1) zwischen 1 und 4 mm größer ist als an seinem schmälsten inneren Ende (d2).

6. Eine Katalysatoranordnung nach einem der Ansprüche 1 bis 5, **dadurch gekennzeichnet, dass** die Höhe (h) des Anschlussstücks (2) zwischen 1 und 15 mm beträgt.

7. Eine Katalysatoranordnung nach Anspruch 6, weiter **dadurch gekennzeichnet, dass** die Höhe (h) des Anschlussstücks (2) zwischen 3 und 6 mm beträgt.

8. Eine Katalysatoranordnung nach einem der Ansprüche 1 bis 7, **dadurch gekennzeichnet, dass** die angefaste Oberfläche (8) des Hohlraums einen Winkel zu einer Mittenachse (11) bildet, der zwischen 10° und 60° beträgt.

9. Eine Katalysatoranordnung nach Anspruch 8, **dadurch gekennzeichnet, dass** die angefaste Oberfläche (8) des Hohlraums einen Winkel zu einer Mittenachse (11) bildet, der zwischen 20° und 40° beträgt.

10. Eine Katalysatoranordnung nach einem der Ansprüche 1 bis 9, **dadurch gekennzeichnet, dass** die angefaste Oberfläche (9) des Anschlussstücks einen Winkel zu einer Mittenachse (11) bildet, der zwischen 10° und 60° beträgt.

11. Eine Katalysatoranordnung nach Anspruch 10, **dadurch gekennzeichnet, dass** die angefaste Oberfläche (9) des Anschlussstücks einen Winkel zu einer Mittenachse (11) bildet, der zwischen 20° und 40° beträgt.

12. Katalysatoranordnung nach einem der Ansprüche 1 bis 11, **dadurch gekennzeichnet, dass** die Verblechung ein Metall enthält.

13. Katalysatoranordnung nach einem der Ansprüche 1 bis 12, **dadurch gekennzeichnet, dass** das Anschlussstück (2) ein Metall enthält.

14. Katalysatoranordnung nach einem der Ansprüche 1 bis 13, **dadurch gekennzeichnet, dass** die Tragmatte (4) ein isolierendes Material enthält.

15. Katalysatoranordnung nach einem der Ansprüche 1 bis 14, **dadurch gekennzeichnet, dass** der Katalysator aus Keramik besteht.

## Revendications

1. Ensemble catalytique comprenant un catalyseur (5) fait d'un matériau poreux dans un système d'échappement des gaz d'un véhicule à moteur, ledit catalyseur possédant une cavité (6) destinée à recevoir une partie au moins d'un élément détecteur (1) d'une sonde des gaz d'échappement, ladite cavité ayant une entrée (7), ladite entrée étant entourée d'un gainage (3) et d'une matte de support (4) située entre le gainage (3) et la surface du catalyseur, dans lequel un bossage (2) est placé entre l'élément détecteur (1) et le gainage (3) entourant l'entrée de la cavité (6),
***caractérisé en ce que*** l'entrée (7) de la cavité (6) possède une surface chanfreinée (8) et ***en ce que*** le bossage (2) possède également une surface chanfreinée (9) faisant face à la surface chanfreinée (8) de l'entrée (7) de la cavité, créant ainsi un intervalle (10) entre lesdites deux surfaces chanfreinées pour permettre la circulation du gaz entre elles.

2. Ensemble catalytique selon la revendication 1, ***caractérisé en ce que*** la largeur (a) de l'intervalle (10) entre la surface chanfreinée (8) de la cavité et la surface chanfreinée (9) du bossage est comprise entre 1 et 10 mm.

3. Ensemble catalytique selon la revendication 2, ***caractérisé en ce que*** la largeur (a) de l'intervalle (10) entre la surface chanfreinée (8) de la cavité et la surface chanfreinée (9) du bossage est comprise entre 2 et 5 mm.

4. Ensemble catalytique selon l'une quelconque des revendications 1 à 3, ***caractérisé en ce que*** le diamètre de l'entrée chanfreinée (7) de la cavité est de 1 à 10 mm plus grand à l'extrémité extérieure plus large (d1) qu'à son extrémité intérieure plus étroite (d2).

5. Ensemble catalytique selon la revendication 4, ***caractérisé en ce que*** le diamètre de l'entrée chanfreinée (7) de la cavité est de 1 à 4 mm plus grand à l'extrémité extérieure plus large (d1) qu'à son extrémité intérieure plus étroite (d2).

6. Ensemble catalytique selon l'une quelconque des revendications 1 à 5, ***caractérisé en ce que*** la hauteur (h) du bossage (2) est comprise entre 1 et 15 mm.

7. Ensemble catalytique selon la revendication 6, ***caractérisé* en outre *en ce que*** la hauteur (h) du bossage (2) est comprise entre 3 et 6 mm.

8. Ensemble catalytique selon l'une quelconque des revendications 1 à 7, ***caractérisé en ce que*** la surface chanfreinée (8) de la cavité forme avec un axe central (11) un angle qui est compris entre 10° et 60°.

9. Ensemble catalytique selon la revendication 8, ***caractérisé en ce que*** la surface chanfreinée (8) de la cavité forme avec un axe central (11) un angle qui est compris entre 20° et 40°.

10. Ensemble catalytique selon l'une quelconque des revendications 1 à 9, ***caractérisé en ce que*** la surface, chanfreinée (9) du bossage forme avec un axe central (11) un angle qui est compris entre 10° et 60°.

11. Ensemble catalytique selon la revendication 10, ***caractérisé en ce que*** la surface chanfreinée (9) du bossage forme avec un axe central (11) un angle qui est compris entre 20° et 40°.

12. Ensemble catalytique selon l'une quelconque des revendications 1 à 11, ***caractérisé en ce que*** le gainage comprend un métal.

13. Ensemble catalytique selon l'une quelconque des revendications 1 à 12, ***caractérisé en ce que*** le bossage (2) comprend un métal.

14. Ensemble catalytique selon l'une quelconque des revendications 1 à 13, ***caractérisé en ce que*** la matte de support (4) comprend un matériau isolant.

15. Ensemble catalytique selon l'une quelconque des revendications 1 à 14, ***caractérisé en ce que*** le catalyseur est fait d'une céramique.
